# EUROPÄISCHE PATENTSCHRIFT

(11) **EP 3 279 044 B1**
(45) Veröffentlichungstag und Bekanntmachung des Hinweises auf die Patenterteilung: **20.04.2022**
(21) Anmeldenummer: 17177448.2
(22) Anmeldetag: 22.06.2017
(51) Int. Cl.: B60S 9/00, B62D 55/06, B66C 23/36, B66C 23/80, B66C 23/76

(54) **MOBILE ARBEITSMASCHINE**
MOBILE WORK MACHINE
MACHINE DE TRAVAIL MOBILE

(30) Priorität: 29.07.2016 DE 202016004687 U
(43) Veröffentlichungstag der Anmeldung: 07.02.2018
(73) Patentinhaber: Liebherr-Werk Nenzing GmbH, 6710 Nenzing (AT)
(72) Erfinder: Mietschnig, Walter, 6708 Brand (AT)
(74) Vertreter: Laufhütte, Dieter

(56) Entgegenhaltungen:
- CN-Y- 2 308 636
- DE-A1-102005 047 745
- JP-A- H10 265 176
- JP-A- 2013 023 849
- JP-B2- 3 560 256
- US-A- 4 446 976

## Beschreibung

Die vorliegende Erfindung betrifft eine mobile Arbeitsmaschine und befasst sich insbesondere mit dem enormen Bodendruck, der bei einer Belastung einer mobilen Arbeitsmaschine, bspw. bei einem Raupenkran, entsteht.

Der hohe Bodendruck, der bei Belastung einer mobilen Arbeitsmaschine entsteht, wird als ein entscheidender Faktor angesehen, der im Vorfeld eines Einsatzes einer mobilen Arbeitsmaschine abzuklären ist. Insbesondere bei einer Auslegerorientierung eines Raupenkrans, die parallel zur Längsrichtung des Unterwagens oder um den Winkelbetrag von +/-30° davon abweichend ist, treten zwei bis dreimal so große Bodendrücke auf, als dies bei einer Auslegerorientierung quer zum Unterwagen (und somit auch quer zu den Raupenträgern) der Fall ist. Das Nichtbeachten bzw. das Unterschätzen dieser hohen Druckvariation oder auch der hohen Bodendrücke insgesamt führt in Extremfällen zu Unfällen aufgrund von Bodenversagen. Dabei gibt der unter dem Raupenkran vorhandene Boden aufgrund des zu hohen Bodendrucks nach und lässt den Raupenkran im ungünstigen Fall zu einer Seite hin kippen.

Der durch den Raupenkran ausgeübte hohe Abstützdruck auf den Boden liegt in der Geometrie des Raupenfahrwerks begründet. Bei den beiden parallel zueinander ausgerichteten Raupenträgern wird bei Belastung quer zu diesen (zur Seite) die gesamte Aufstandsfläche der Raupe gleichmäßig belastet. Bei Belastung längs zu den Raupenträgern (nach vorne) ergibt sich keine gleichmäßige sondern eine Trapez - bzw. dreiecksförmige Bodendruckverteilung, die von der Lage des Schwerpunkts bzw. Druckmittelpunkts des Raupenkrans abhängig ist. Ist die Exzentrizität des Druckmittelpunkts größer als ein Sechstel der Raupenaufstandsfläche führt dies sogar dazu, dass ein Teil der Aufstandsfläche der Raupe abhebt, was zu einem weiteren Ansteigen des maximalen Bodendrucks führt. Eine solche Situation entsteht typischerweise bei einem großen Lastmoment mit nach vorne gerichteten Ausleger.

Um ein Kippen des Raupenkrans zu vermeiden, gibt es im Stand der Technik Überlegungen klappbare Abstützarme vorzusehen, die die Standsicherheit des Krans während des Betriebs erhöhen (vgl. US 2010/0320166 A1 oder CN 2308636 Y). Typischerweise heben die Raupen bei ausgefahrenen Abstützarmen ab, um einen undefinierten Kraftfluss, der von den Steifigkeiten der Abstützarme und der Tragkonstruktion bzw. der Raupenträger abhängt, zu verhindern. Nachteilhaft an dieser Umsetzung ist, dass die im Stand der Technik vorgeschlagenen Konstruktionsvarianten sehr aufwendig und teuer sind. Darüber hinaus wird das Gesamtgewicht des Unterwagens erheblich erhöht, was zusätzliche Nachteile hinsichtlich des Transports und der Aufbauzeit des Krans mit sich bringt. Auch erfordern die von dem Raupenkran nach außen abstehenden Abstützarme zusätzlichen Platz, der nicht an jedem Einsatzort ohne weiteres vorhanden ist.

JP H10 265176 A offenbart eine mobile Arbeitsmaschine gemäß dem Oberbegriff des Anspruchs 1.

Es ist das Ziel der vorliegenden Erfindung, die oben aufgeführten Probleme zu überwinden. Insbesondere zielt die Erfindung darauf ab, die von einer mobilen Arbeitsmaschine auf den Boden übertragenen Bodendrücke am Einsatzort zu verringern, was zu einem größeren Einsatzspektrum der Arbeitsmaschine führt, da das Spektrum der zulässigen Untergründe vergrößert wird. Als mobile Arbeitsmaschine kann insbesondere ein Krane oder eines Ramm-und Bohrgerät angesehen werden.

Dies gelingt mit einer mobilen Arbeitsmaschine, bspw. einem Raupenkran oder dergleichen, der die Merkmale des Anspruchs 1 aufweist. Demnach umfasst der erfindungsgemäße Raupenkran einen Unterwagen mit einem Raupenfahrgestell oder Raupenfahrwerk, und einen Oberwagen, der in Bezug auf den Unterwagen drehbar gelagert ist, wobei das Raupenfahrgestell zwei parallel zueinander ausgerichtete Raupenträger aufweist, entlang deren Längsrichtung jeweils eine Raupenkette bewegbar angeordnet ist. Die mobile Arbeitsmaschine ist dadurch gekennzeichnet, dass jeweils ein Kragarm an den einander zugewandten Innenseiten der Raupenträger vorgesehen ist, und an dem distalen Ende des jeweiligen Kragarms ein Abstützzylinder angeordnet ist. Vorzugsweise kann der Kragarm ein fixer, klapp-oder schwenkbarer oder abnehmbarer Kragarm sein.

Mithilfe einer so ausgebildeten mobilen Arbeitsmaschine bzw. einem entsprechend ausgebildeten Unterwagen der mobilen Arbeitsmaschine ist es möglich, den Bodendruck während eines Einsatzes signifikant zu reduzieren, da beispielsweise die beiden Abstützzylinder auf eine Abstützplatte aufgesetzt werden können, wodurch eine Reduzierung des maximalen Bodendrucks erreicht wird. Der dabei entstehende Kraftfluss des Lastmoments auf den Boden erfolgt nach wie vor über die Raupenträger und ist somit statisch bestimmt, unabhängig von den Steifigkeiten der Tragkonstruktion des Unterwagens sowie der Raupenträger. Zudem sorgen die von den Innenseiten der beiden Raupenträger abstehenden Kragarme für einen geringen Raum, der von dem Raupenkran während eines Einsatzes in Beschlag genommen wird.

Vorzugsweise ist der Abstützzylinder jedes Kragarms in eine Richtung ein- bzw. ausfahrbar, die orthogonal zu einer durch die Längsrichtungen der zwei Raupenträger definierten Ebene sein kann. Bei bestimmungsgemäßer Orientierung der Arbeitsmaschine, bspw. eines Raupenkrans, ist der Abstützzylinder demnach vertikal zu einer Bodenebene ein- bzw. ausfahrbar. Dies ermöglicht beispielsweise das Positionieren der Arbeitsmaschine derart, dass eine sich im Zwischenbereich der beiden parallel zueinander ausgerichteten Raupenträger befindende Abstützplatte genutzt wird, sodass die ausgefahrenen Abstützzylinder sich auf dieser Platte abstützen können. Dadurch verringert sich der von der Arbeitsmaschine auf den Untergrund ausgeübte Bodendruck.

Ferner kann vorgesehen sein, dass die Positionen der jeweiligen Kragarme in Längsrichtung des Raupenträgers identisch sind.

Nach einer weiteren optionalen Modifikation der Erfindung ist der jeweilige Kragarm an seinem zugehörigen Raupenträger über ein Drehgelenk befestigt, dessen Drehachse vorzugsweise orthogonal zu der durch die Längsrichtungen der zwei Raupenträger definierten Ebene ist. Dies bedeutet, dass der Kragarm bei bestimmungsgemäßer Orientierung der Arbeitsmaschine um eine Vertikalachse schwenkbar ist. Dadurch ist es möglich, den zwischen den Raupenträgern vorhandenen Raum von räumlichen Beeinträchtigungen freizuhalten, sollten die Kragarme nicht erforderlich sein.

Gemäß der Erfindung umfasst die Arbeitsmaschine ferner eine Abstützplatte, die Verbindungsmittel zum lösbaren Verbinden mit den Abstützzylindern aufweist, wobei vorzugsweise die Abstützplatte im verbundenen Zustand mit einem Ein- bzw. Ausfahren der Abstützzylinder entsprechend verfahrbar ist. Dabei kann der Abstützzylinder entsprechende Verbindungsmittel zum Eingehen einer lösbaren Verbindung mit der Platte aufweisen.

Die Abstützplatte ist dazu ausgelegt, während eines Einsatzes der Arbeitsmaschine auf den Untergrund, auf dem sich die Arbeitsmaschine befindet, abgesetzt zu werden. Dadurch wird der maximale Bodendruck, der von der Arbeitsmaschine während des Einsatzes auf den Untergrund ausgeübt wird, verringert. Bei einem Verfahren der Arbeitsmaschine kann die Abstützplatte über die mit der Abstützplatte in Verbindung stehenden Abstützzylinder vom Boden abgehoben werden, so dass der Kran zusammen mit der Platte verfahren werden kann.

Gemäß der Erfindung ist es vorgesehen, dass die Abstützplatte den Abstützzylinder des einen Raupenträgers mit dem Abstützzylinder des anderen Raupenträgers verbindet. Typischerweise verbindet die Abstützplatte die Abstützzylinder der beiden Raupenträger, die auf der identischen Längsposition der Raupenträger angeordnet sind. Die Abstützplatte ist dazu ausgelegt, den Bodendruck zu vermindern, indem sie den einen Raupenträger mit dem anderen Raupenträger über die Abstützzylinder und Bodenplatte verbindet.

Gemäß einer weiteren optionalen Modifikation der Erfindung ist die Abstützplatte in einem mit der Arbeitsmaschine verbundenen Zustand teilweise oder vollständig in einem Bereich zwischen den beiden parallel zueinander ausgerichteten Raupenträgern angeordnet.

Vorzugsweise ist der Bereich zwischen den beiden parallel zueinander ausgerichteten Raupenträgern durch ein Rechteck begrenzt, bei dem zwei gegenüberliegende Rechteckseiten den Längsinnenseiten der beiden Raupenträger entsprechen. Dadurch wird sichergestellt, dass die erfindungsgemäße Arbeitsmaschine während seines Einsatzes kompakte Ausmaße besitzt und in seiner Funktionsfähigkeit nicht eingeschränkt ist.

Nach einer weiteren Ausführungsform der vorliegenden Erfindung umfasst die Arbeitsmaschine ferner einen Ballast, wobei der Ballast auf der Abstützplatte angeordnet ist, die mit der Arbeitsmaschine über die Abstützzylinder verbunden ist. Vorzugsweise dient der Ballast als Zentralballast am Unterwagen. Durch das Ballastieren der Abstützplatten ist der Zentralballast einer Arbeitsmaschine, bspw. bei einem Raupenkran, besonders vorteilhaft anbringbar. Insbesondere ist hierbei die Montage des Zentralballasts bzw. der Ballasteinheiten auf der Abstützplatte in einfacher Weise durchzuführen, da die Abstützplatte mit dem darauf angeordnetem Ballast lediglich auf einem Untergrund abzulegen ist und die Arbeitsmaschine von selbst die Abstützplatte mithilfe seiner beweglichen Abstützzylinder aufnehmen kann. Dazu verfährt die Arbeitsmaschine einfach in die entsprechende Position und verbindet die Abstützzylinder über die Verbindungsmittel der Abstützplatte und/oder die Verbindungsmittel der Abstützzylinder mit der Abstützplatte selbst. Die Montage des Ballasts bzw. der Abstützplatte ist demnach sehr einfach.

Gemäß einer weiteren Fortbildung der Erfindung sind die beiden Raupenträger der Arbeitsmaschine mittig in ihrer Längsrichtung in einem ersten vorderen Abschnitt und einen zweiten hinteren Abschnitt unterteilbar, wobei an gegenüberliegenden Innenseiten angeordnete Kragarme mit ihrem zugehörigen Abstützzylinder sowohl in dem ersten vorderen Abschnitt als auch in dem zweiten hinteren Abschnitt vorhanden sind. Insgesamt gibt es nun also die Möglichkeit in dem ersten vorderen Abschnitt als auch in dem zweiten hinteren Abschnitt, die typischerweise voneinander durch ein Mittelteil, das die beiden Raupenträger miteinander verbindet, getrennt sind, je eine Abstützplatte vorzusehen, die jeweils die parallel zueinander ausgerichteten Raupenträger über die entsprechenden Abstützzylinder und Kragarme verbindet.

Mit dieser Ausführung ist es möglich, den Bodendruck weiter zu verringern.

Vorzugsweise sind dabei eine erste Abstützplatte für die Kragarme in dem ersten vorderen Abschnitt und eine zweite Abstützplatte für die Kragarme in dem zweiten hinteren Abschnitt vorgesehen. Dabei sind in einer bevorzugten Ausführungsform die erste und die zweite Abstützplatte über die entsprechenden Abstützzylinder mit den zugehörigen Kragarmen verbunden.

Weitere Merkmale, Einzelheiten und Vorteile der Erfindung werden anhand der nachfolgenden detaillierten Diskussionen der Figuren ersichtlich. Dabei zeigen:
- Fig. 1:: ein Schaubild zur Erläuterung des maximalen Bodendrucks eines herkömmlichen Raupenkrans, bei einer 360°-Drehung des Oberwagens
- Fig. 2:: eine Darstellung der Bodendruckverteilung bei einer mittig auf eine Raupe wirkenden Kraft,
- Fig. 3:: eine Darstellung eines Bodendrucks bei einer von der Mitte versetzt auf eine Raupe wirkenden Kraft,
- Fig. 4:: eine Darstellung des Bodendrucks bei einer von der Mitte stark versetzt wirkenden Kraft auf eine Raupe,
- Fig. 5:: eine Draufsicht auf einen Teil des erfindungsgemäßen Raupenkrans,
- Fig. 6:: ein Schaubild zur Erläuterung des maximalen Bodendrucks bei einem erfindungsgemäßen Raupenkran,
- Fig. 7:: ein Schaubild zum gleichzeitigen Darstellen der maximalen Kantendrücke eines herkömmlichen und des erfindungsgemäßen Raupenkrans,
- Fig. 8:: eine Draufsicht auf einen Teil des erfindungsgemäßen Raupenkrans nach einer weiteren Ausführungsform,
- Fig. 9a:: ein Schaubild zur Darstellung des maximalen Bodendrucks des erfindungsgemäßen Raupenkrans nach einer weiteren Ausführungsform,
- Fig. 9b:: ein Schaubild zum Vergleich des maximalen Bodendrucks von einem herkömmlichen Raupenkran und den Raupenkränen gemäß den Ausführungen der Erfindung,
- Fig. 10:: eine Perspektivansicht eines erfindungsgemäßen Raupenkrans von schräg vorne,
- Fig. 11:: eine Detailansicht des Abstützzylinders und der mit dieser verbindbaren Abstützplatte,
- Fig. 12:: eine Frontansicht der erfindungsgemäßen Arbeitsmaschine, die die Verfahrbarkeit der mit dem Abstützzylinder gekoppelten Abstützplatte zeigt,
- Fig. 13:: eine perspektivische Teilansicht des erfindungsgemäßen Raupenkrans,
- Fig. 14:: eine Detailansicht des an einem Raupenträger angeordneten Kragarms mit Abstützzylinder,
- Fig. 15:: eine perspektivische Ansicht einer Abstützplatte mit einer Halterung für einen Ballast, und
- Fig.16:: eine perspektivische Ansicht des Unterwagens der erfindungsgemäßen mobilen Arbeitsmaschine mit einer verbundenen Abstützplatte im vollballastierten Zustand.

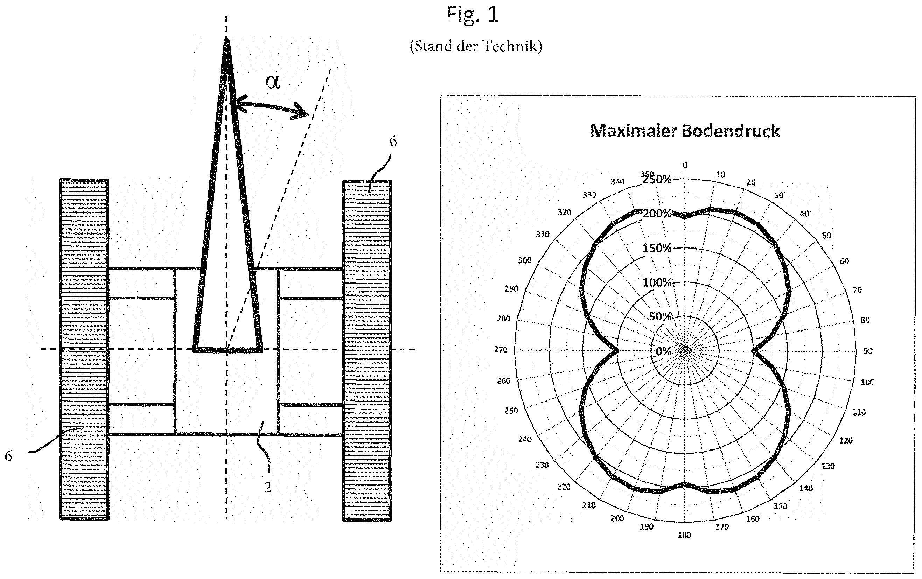

Fig. 1 zeigt eine Darstellung, die den maximalen Bodendruck also der Druck, der auf den Boden durch den darauf platzierten Raupenkran ausgeübt wird, wiedergibt. Auf der linken Seite erkennt man, dass es sich bei der hier vorliegenden Krankonfiguration um eine aus dem Stand der Technik handelt. Das parallel zu den beiden Raupenträgern angeordnete Dreieck zeigt nach vorne und steht für eine Ausrichtung des Kranauslegers bei 0°. Die 0°-Stellung steht hierbei für eine Ausrichtung des Kranauslegers in eine Orientierung nach vorne parallel zu den beiden Raupenträgern. Eine Rotation des Auslegers um eine zur Bodenebene vertikale Achse beschreibt dabei den Auslegerwinkel a, wobei für jeden Auslegerwinkel a ein spezifischer Bodendruckwert in dem rechts dargestellten Diagramm wiedergegeben ist.

Hierin erkennt man, dass das Minimum des maximalen Bodendrucks bei einer Abweichung von 90° um die Ausrichtung nach vorne (0°) oder nach hinten (180°) erreicht wird. Dies ergibt sich daraus, da die hierbei auftretende Belastung quer zu den Raupenträgern (zur Seite) anliegt und somit die gesamte Aufstandsfläche der Raupe gleichmäßig belastet ist. Dieser bei 90° bzw. 270° herrschende Bodendruck wird in dem rechts dargestellten Diagramm mit 100 % bezeichnet. Ferner kann man aus dem Diagramm entnehmen, dass der maximale Bodendruck bei einer Abweichung von ca. 20° zur Auslegerrichtung nach vorne (0°) bzw. nach hinten (180°) auftritt. Hierbei ist der maximale Bodendruck mehr als doppelt so groß wie bei einer Belastung quer zu den Raupenträgern (90° oder 270°). Der bei beispielsweise 20° entstehende maximale Bodendruck ist der maximale Bodendruck, der durch eine der beiden Raupen an den Untergrund gegeben wird. Man erkennt, dass der Bodendruck in Abhängigkeit des Auslegerwinkels α sehr stark variiert und bei einem Arbeitsbereich über den gesamten Auslegerwinkel hinweg ein mehr als doppelt so großer Bodendruck wie bei einer Auslegerorientierung quer zu den Raupenträgern auftritt. Oftmals führt diese große Varianz des maximalen Bodendrucks bei einem Ändern des Auslegerwinkels α zu einem unerwarteten Nachgeben des Bodens und verursacht dadurch ein Bodenversagen, das im äußersten Fall zu einem Umkippen der Arbeitsmaschine führen kann.

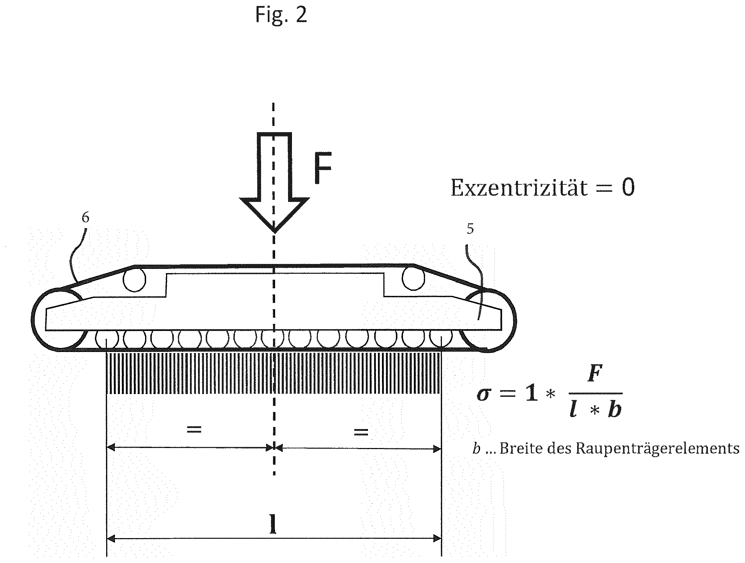

Fig. 2 zeigt die Verteilung des Bodendrucks bei einem Ansetzen einer Kraft mittig entlang der Längsrichtung der Raupe. Der Raupenträger 5 weist dabei eine in seiner Längsrichtung bewegbare Raupenkette 6 auf. Ist die auf die Raupe wirkende Kraft mittig zur Länge des Raupenträgers angeordnet, so erfolgt eine gleichmäßige Weitergabe des Drucks an den unter der Raupe angeordneten Boden. Dies ist durch die gleichgroßen unter der Raupe angeordneten Striche dargestellt. Die Exzentrizität der auf die Raupe wirkenden Kraft in Längsrichtung beträgt hierbei 0, da keine Auslenkung um die Mitte entlang der Längsrichtung der Raupe vorliegt.

In einem Raupenkranbetrieb tritt der in Fig. 2 dargestellte Zustand bei einer Auslegerposition von 90° bzw. 270° auf. Der Ausleger befindet sich damit quer zur Längsrichtung der beiden Raupenträger bzw. in einer die Mitte der Längsträger schneidenden Normalenebene.

Die Kraft wird hierbei gleichmäßig über die Aufstandsfläche I an den Boden weitergegeben.

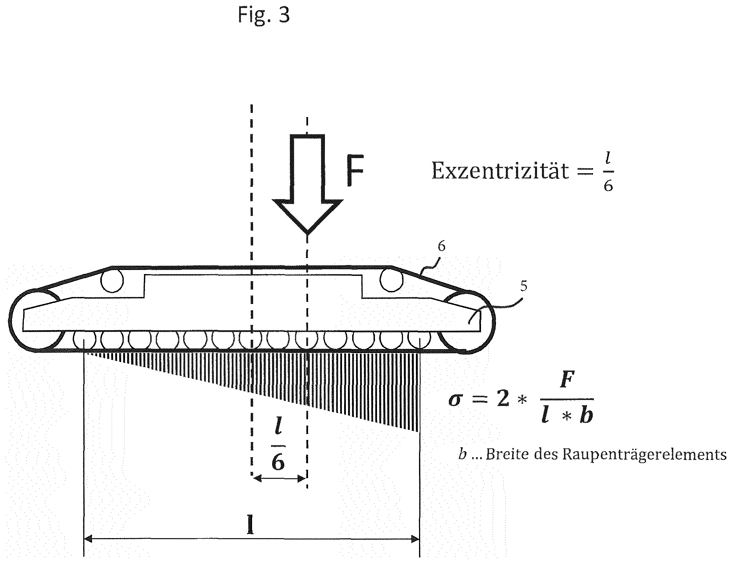

Fig. 3 zeigt einen Zustand, in dem die auf die Raupe wirkende Kraft aus der Mitte um 1/6 der Aufstandsfläche (auch Auflagelänge) versetzt ist. Dabei erkennt man, dass die Bodendrücke kontinuierlich entlang der Längsrichtung des Raupenträgers zunehmen und zwar in Richtung des dem Krafteinleitpunkt näheren Ende der Raupe.

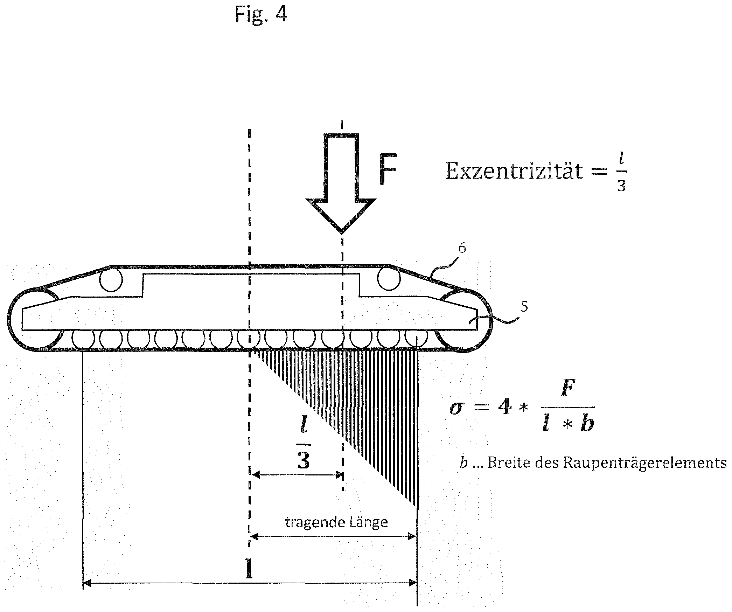

Fig. 4 zeigt ein weiteres Verschieben der Kraft aus der Mitte der Raupe hinweg. Die auf die Raupe wirkende Kraft ist nun ein Drittel der Auflagelänge der Raupe von der Mitte versetzt. Man erkennt, dass die tragende Länge der Raupe, also der Bereich, der Kraft in den Boden weitergibt, sich im Vergleich zu den vorherigen Figuren 2 und 3 halbiert hat. Zudem erkennt man, dass das vom Krafteinleitpunkt entfernte Ende der Raupe unter Umständen eine kleine Bewegung vom Boden weg macht. Der maximale Bodendruck ist bei dieser Konfiguration am größten und könnte beispielsweise bei einem Auslegerwinkel von ca. 20°, 160°, 200° bzw. 340° auftreten.

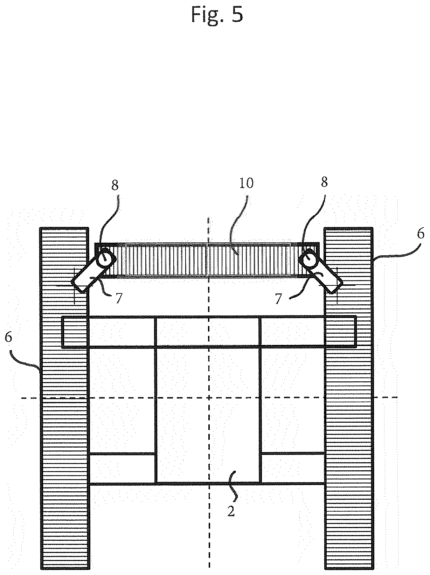

Fig. 5 zeigt eine Draufsicht auf eine Skizze des Unterwagens des erfindungsgemäßen Raupenkrans. Man erkennt neben der in Längsrichtung auf dem Raupenträger 5 bewegbaren Raupenkette 6 jeweils einen Kragarm 7 an den einander zugewandten Innenseiten der Raupenträger 5. An dem von dem Raupenträger 5 beabstandeten Ende besitzt jeder der Kragarme 7 einen Abstützzylinder 8, der mit einer Abstützplatte 10 in Verbindung steht. Dabei verbindet die Abstützplatte 10 die an den unterschiedlichen Raupenträgern befestigten Abstützzylinder 8. Das Vorsehen einer Abstützplatte in der beschriebenen Art und Weise verringert den Bodendruck bei einem Einsatz des Raupenkrans.

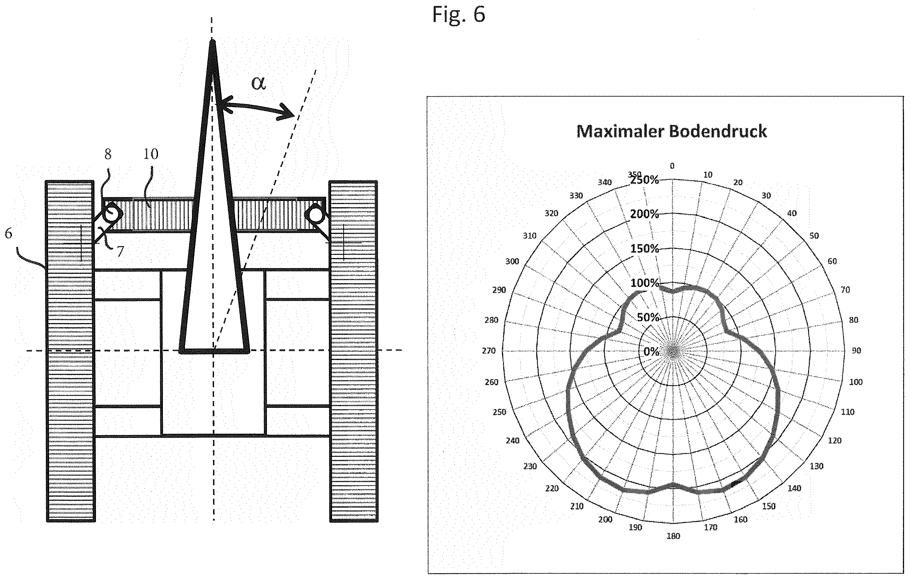

Fig. 6 zeigt das Diagramm des maximalen Bodendrucks über eine volle Drehung des Auslegers. Bei Betrachtung des Diagramms erkennt man, dass bei Überstreichen des Auslegers von der Seite des Raupenkrans, die mit einer Abstützplatte 10 versehen ist, der maximale Bodendruck signifikant sinkt. Dies ist gleichbedeutend mit einem Verringern des vom Raupenkran ausgeübten Bodendrucks. So verringert sich bei einem Auslegerwinkel von 0° der Bodendruck auf ca. 85% wohingegen bei der Ausführung ohne Abstützplatte 10 dieser bei ca. 190% lag. Für die Seite des Raupenkrans, die keine Abstützplatte aufweist, ergeben sich keine Verbesserungen im Vergleich zu einem herkömmlichen Raupenkran.

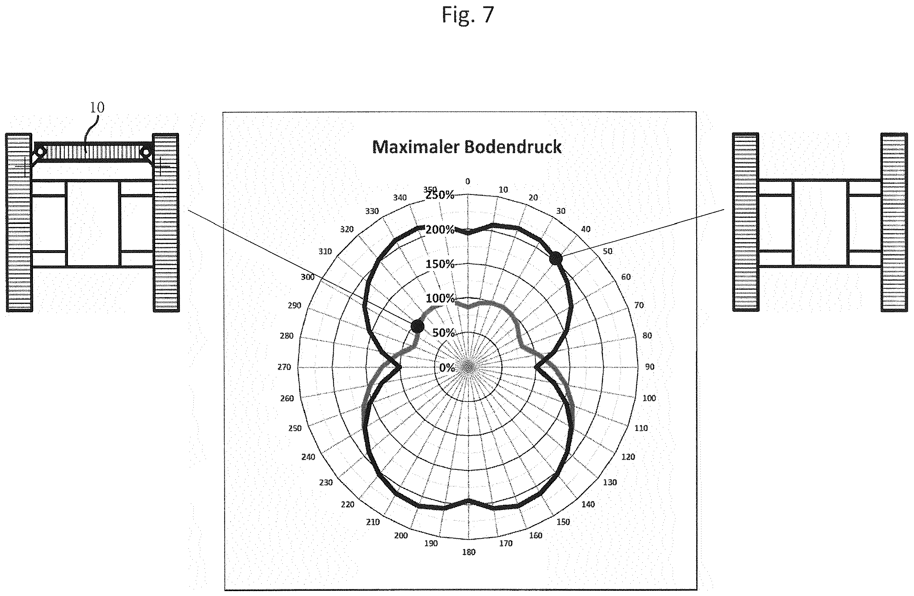

Fig. 7 stellt ein Diagramm dar, in dem ein Raupenkran ohne Abstützplatte mit einem Raupenkran mit Abstützplatte verglichen wird. Hieran lässt sich sehr gut erkennen, dass der Raupenkran mit Abstützplatte in einen Bereich von ± 85° um den Auslegerwinkel α = 0 einen sehr viel geringeren maximalen Bodendruck auf den Untergrund ausübt. In einem Bereich von ± 85° bis 120° um den Winkel α = 0 ist der Bodendruck des mit der Abstützplatte versehenen Raupenkrans etwas größer als der von dem Raupenkran ohne Abstützplatte, bevor die beiden Diagrammlinien in einem Bereich von ± 120° bis 180° um den Auslegerwinkel α = 0 ineinander übergehen.

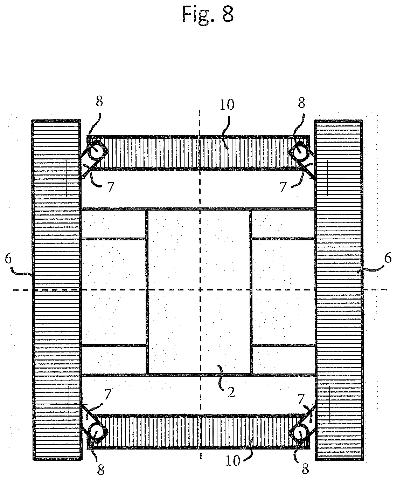

Fig. 8 zeigt eine weitere Ausführungsform der vorliegenden Erfindung, bei der ein erfindungsgemäßer Raupenkran sowohl in einem vorderen als auch in einem hinteren Bereich über Kragarme 7 mit einem daran angeordneten Abstützzylinder 8 verfügt, die mit einer jeweiligen Abstützplatte 10 in Verbindung stehen.

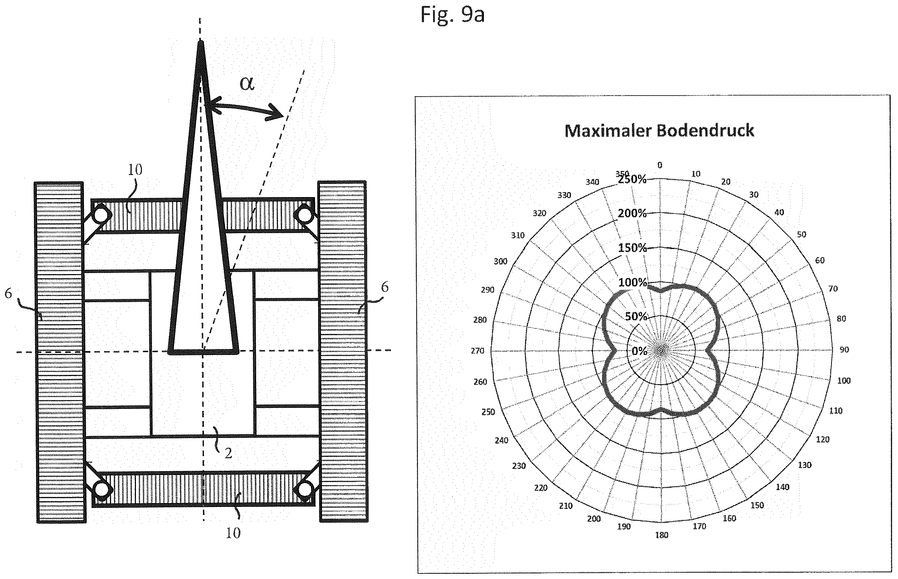

Fig. 9a zeigt das entsprechende Diagramm des maximalen Bodendrucks über den Auslegerwinkel hinweg für die zweite Ausführungsform des Raupenkrans mit einer Abstützplatte sowohl im vorderen als auch im hinteren Bereich des Raupenfahrwerks.

Man erkennt bereits bei der Betrachtung des hier zugehörigen Diagramms, dass der maximale Bodendruck im Vergleich zu einem Raupenkran ohne Abstützplatte über alle Auslegerwinkel hinweg geringer ist.

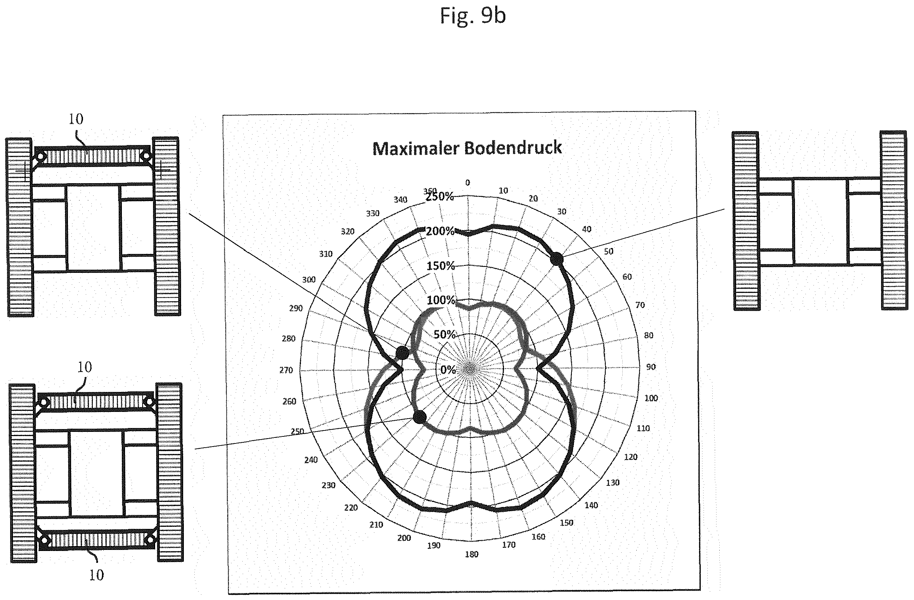

In Fig. 9b ist eine Gegenüberstellung der bisher diskutierten Raupenkran-Konfigurationen mit ihrem maximalen Bodendruckdiagramm dargestellt.

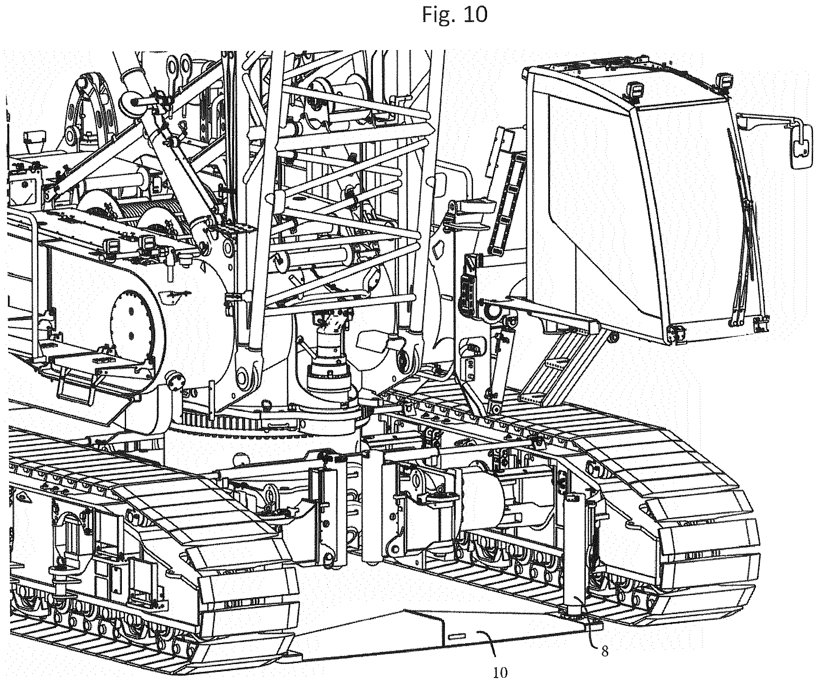

Fig. 10 zeigt eine perspektivische Ansicht eines erfindungsgemäßen Raupenkrans, bei der der Raupenkran 1 gerade so angeordnet ist, dass zwischen seinen beiden Raupenträgern 5 eine Abstützplatte 10 angeordnet ist. Die jeweiligen Abstützzylinder 8 befinden sich dabei noch in einer eingefahrenen Position und haben noch keine Verbindung mit der auf dem Boden liegenden Abstützplatte 10 aufgenommen. Dies passiert erst bei einem Ausfahren des Abstützzylinders in Richtung der Abstützplatte 10.

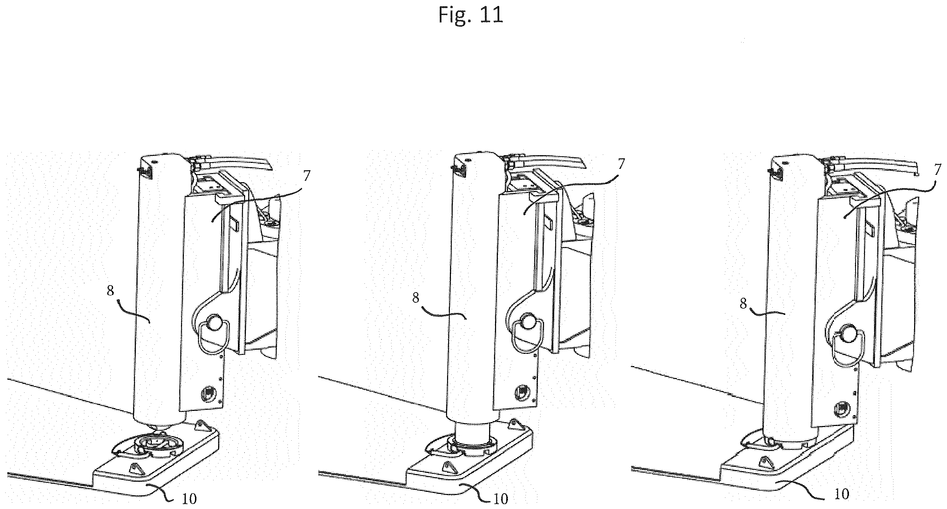

Fig. 11 zeigt den Vorgang des Ausfahrens des Abstützzylinders 8, wobei die linke Darstellung den Abstützzylinder 8 in einer eingefahrenen Position und die mittlere Darstellung den Abstützzylinder 8 in einem ausgefahrenen Zustand zeigt. In dem ausgefahrenen Zustand verbindet sich der Abstützzylinder 8 mit der Abstützplatte 10 in einer lösbaren Art und Weise. Ist jedoch der Abstützzylinder 8 mit der Abstützplatte 10 verbunden, so führt ein Einfahren des Abstützzylinders 8 zu einem Anheben der Abstützplatte 10, wie dies in der rechten Darstellung der Fig. 11 gezeigt ist. Dies ist unter Umständen vorteilhaft bei der Montage des Raupenkrans und bei einem Verfahren des Raupenkrans vor einem Einsatz. Dabei kann vor allem die Ballastierung der mobilen Arbeitsmaschine in einer einfachen Art und Weise ausgeführt werden, indem die Abstützplatte an einem von der Arbeitsmaschine entfernten Ort mit einem Ballast bestückt wird, vorzugsweise durch die Arbeitsmaschine selbst, und dann durch eine Kopplung der Abstützplatte mit der Arbeitsmaschine der Ballast aufgenommen wird.

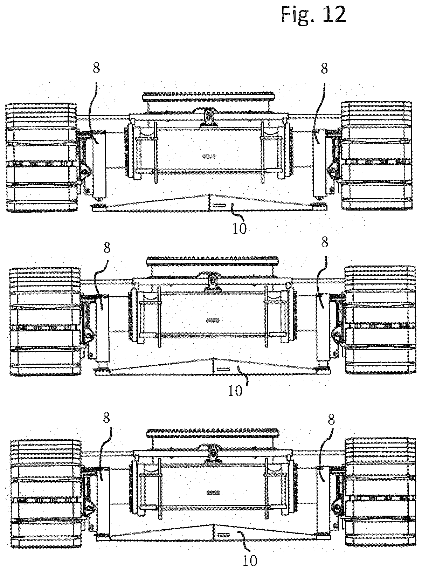

Fig. 12 zeigt eine Frontansicht von einem Unterwagen der erfindungsgemäßen Arbeitsmaschine, wobei die obere Darstellung den Zustand zeigt, in dem die Abstützplatte 10 von den Abstützzylindern 8 entkoppelt ist und sich der Abstützzylinder 8 in einem (teilweise) eingefahrenen Zustand befindet.

Die mittlere Darstellung der Fig. 12 zeigt die Abstützzylinder in einem ausgefahrenen Zustand, sodass diese mit der auf den Boden angeordneten Abstützplatte 10 gekoppelt werden. In diesem Zustand ist eine Abstützung der mobilen Arbeitsmaschine auf der Abstützplatte möglich.

Die untere Darstellung der Fig. 12 zeigt die Abstützplatte in einem gekoppelten Zustand mit den Abstützzylindern. Zudem sind die Zylinder eingefahren, so dass die mobile Arbeitsmaschine zusammen mit der Abstützplatte verfahren werden kann. Durch das Einfahren der Zylinder 8 wird auch die Abstützplatte 10 vom Boden abgehoben.

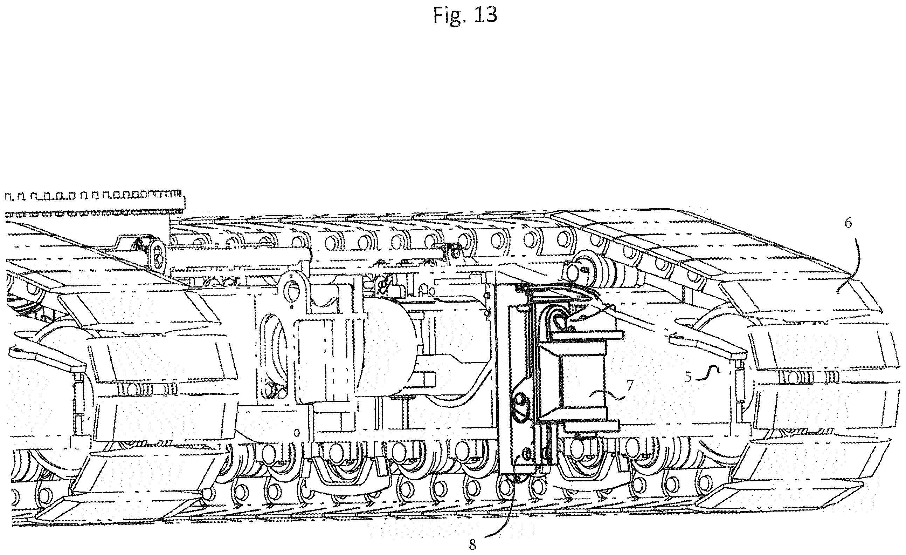

Fig. 13 zeigt eine perspektivische Darstellung, die eine Innenseite eines Raupenträgers und des daran angeordneten Kragarms 7 im Detail zeigt. Man erkennt, dass der Kragarm 7 über ein großes Drehgelenk, dessen Drehachse bei bestimmungsgemäßer Ausrichtung des Raupenkrans vertikal ausgerichtet ist, an dem Raupenträger angelenkt ist. An dem von dem Drehgelenk beabstandeten Ende des Kragarms 7 ist der Abstützzylinder 8 befestigt, der verfahrbar in Richtung des Bodens ausgebildet ist. Vorteil hieran ist, dass bei einem Nichtnutzen der Kragarme bzw. des Kragarms dieser in eine platzsparende Stellung eingeschwenkt werden kann, wie sie in Fig. 13 dargestellt ist.

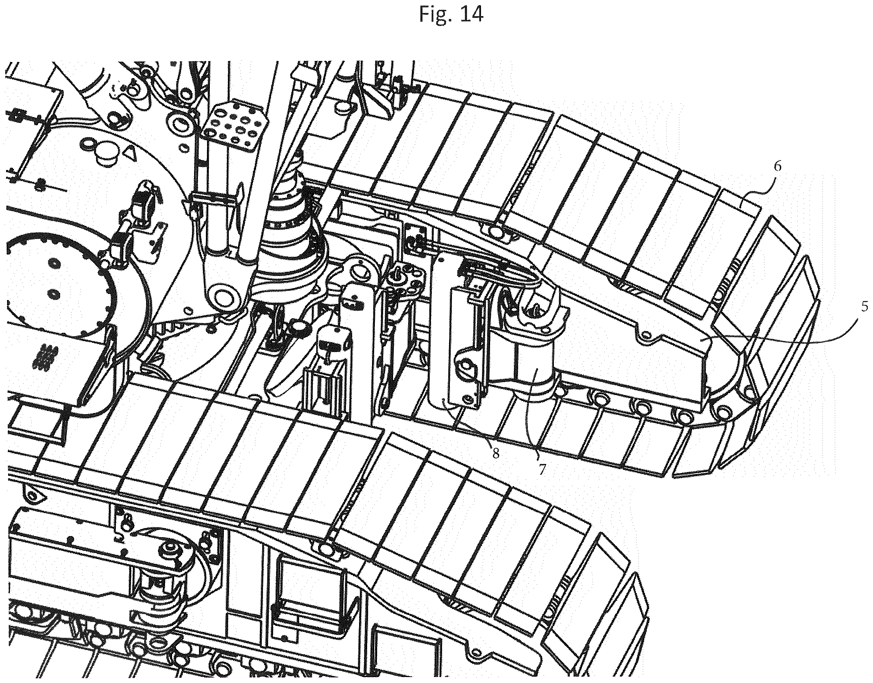

Fig. 14 zeigt erneut eine Detailansicht des Kragarms sowie des daran angeordneten Abstützzylinders 8 aus einer Ansicht von schräg oben. Dabei kann der Kragarm den Abstützzylinder 8 über eine Bolzensteckverbindung aufnehmen, die bei Bedarf einer Reparatur oder dergleichen gelöst werden kann.

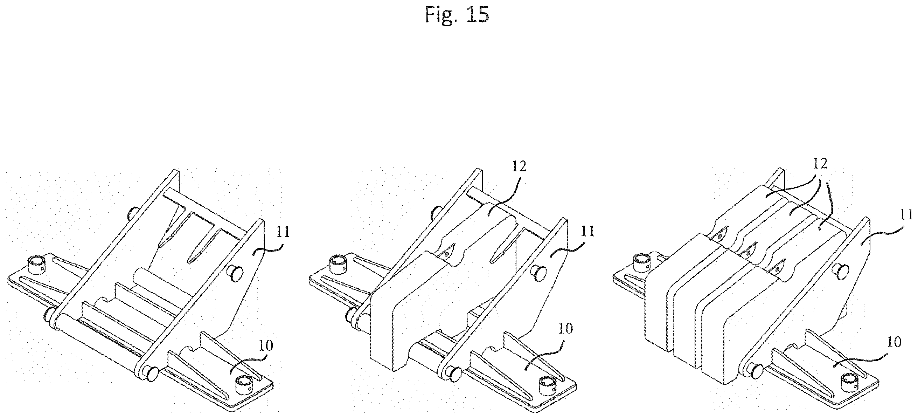

Fig. 15. zeigt mehrere perspektivische Ansichten einer Abstützplatte 10 mit einer Halterung 11 für einen Ballast 12. In der linken Darstellung erkennt man, dass sich noch kein Ballastelement 12 in der Halterung 11 befindet. In der mittleren Darstellung sieht man einen von maximal drei möglichen Ballastelementen 12 in der Halterung 11, wohingegen die rechte Darstellung eine Halterung 11 der Abstützplatte 10 zeigt, in der alle drei Anordnungspositionen für Ballastelemente 12 belegt sind. In dieser Konfiguration ist die Abstützplatte 10 mit ihrer maximalen Anzahl an Ballastelementen 12 versehen (sog. Vollballast-Zustand).

Die Halterung 11 ist dabei so geformt, dass mindestens ein Ballastelement 12 aufgenommen werden kann. Vorzugsweise kann die Halterung 11 bis zu drei plattenförmige Ballastelemente 12 aufnehmen. Nach einer weiteren Fortbildung der Erfindung ist die Halterung 11 so ausgebildet, dass ein Ballastelement 12 mittig in der Abstützplatte 10 anordenbar ist.

Wie aus der Fig. 15 ersichtlich, werden können die Ballastelemente 12 einen plattenförmigen Grundaufbau aufweisen und auf ihrer flächigen Längsseite nebeneinander in der Halterung 11 positioniert werden. Dabei ist von Vorteil, wenn die Aufnahmeplätze der Halterung 11 für die Ballastelemente 12 ungeradzahlig ist, dass dann mit der mittigen Anordnung von bereits einem Ballastelement 12 ein in Breitenrichtung austarierter Ballast vorliegt.

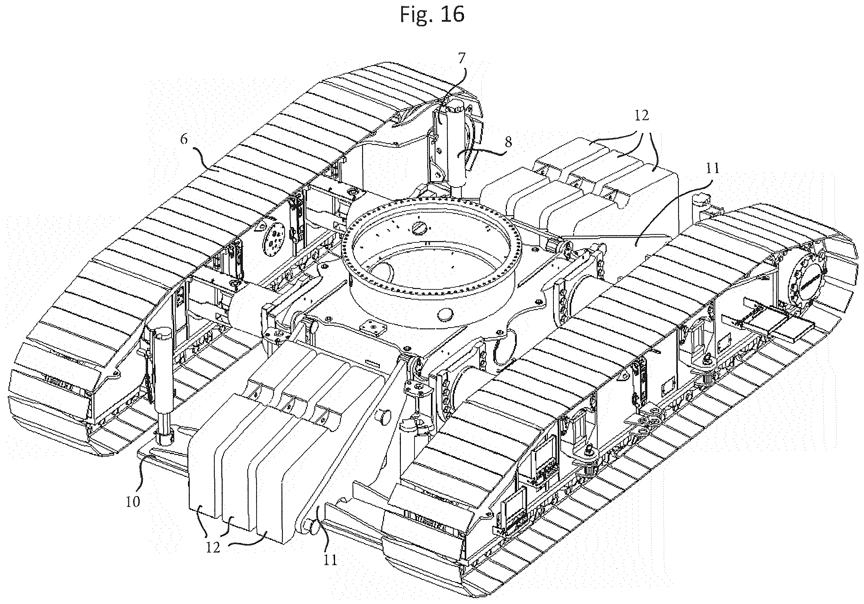

Fig. 16 ist eine perspektivische Ansicht des Unterwagens der erfindungsgemäßen Arbeitsmaschine 1, in der die Abstützplatte 10 mit den Abstützzylindern 8 gekoppelt ist. Zudem erkennt man, dass neben der Vorderseite des Unterwagens auch an der Rückseite des Unterwagens eine Abstützplatte 10 vorhanden ist, von denen beide mit Ballastelementen 12, die in einer jeweiligen Halterung 11 der Abstützplatten 10 angeordnet sind, versehen sind. Die Halterungen 11 nehmen dabei die maximale Anzahl an Ballastelementen 12 auf, so dass sich die Abstützplatten 10 im Vollballast-Zustand befinden.

## Patentansprüche

1. Mobile Arbeitsmaschine (1), insbesondere ein Raupenkran, umfassend:
einen Unterwagen (2) mit einem Raupenfahrwerk (3), und
einen Oberwagen (4), der in Bezug auf den Unterwagen (2) drehbar gelagert ist, wobei
das Raupenfahrwerk (3) zwei parallel zueinander ausgerichtete Raupenträger (5) aufweist, entlang deren Längsrichtung jeweils eine Raupenkette (6) bewegbar angeordnet ist, wobei
jeweils ein Kragarm (7) an den einander zugewandten Innenseiten der Raupenträger (5) vorgesehen ist, und
an dem distalen Ende des jeweiligen Kragarms (7) ein Abstützzylinder (8) angeordnet ist,
**gekennzeichnet durch**
eine Abstützplatte (10), die Verbindungsmittel zum lösbaren Verbinden mit den Abstützzylindern (8) aufweist, wobei vorzugsweise die Abstützplatte (10) im verbundenen Zustand mit einem Verfahren der Abstützzylinder (8) entsprechend ein- bzw. ausfahrbar ist, wobei
die Abstützplatte (10) dazu ausgelegt ist, den Bodendruck zu vermindern, indem sie den einen Raupenträger (5) mit dem anderen Raupenträger (5) über die Abstützzylinder (8) und Abstützplatte (10) verbindet.

2. Mobile Arbeitsmaschine (1) nach Anspruch 1, wobei der Abstützzylinder (8) in eine Richtung ein- bzw. ausfahrbar ist, die vorzugsweise orthogonal zu einer durch die Längsrichtungen der zwei Raupenträger (5) definierten Ebene ist.

3. Mobile Arbeitsmaschine (1) nach einem der vorhergehenden Ansprüche, wobei der Kragarm (7) an seinem zugehörigen Raupenträger (5) über ein Drehgelenk (9) befestigt ist, dessen Drehachse vorzugsweise orthogonal zu der durch die Längsrichtungen der zwei Raupenträger (5) definierten Ebene ist.

4. Mobile Arbeitsmaschine (1) nach einem der vorhergehenden Ansprüche, wobei die Abstützplatte (10) in einem mit dem Raupenkran (1) verbundenen Zustand teilweise oder vollständig in einem Bereich zwischen den beiden parallel zueinander ausgerichteten Raupenträgern (5) angeordnet ist.

5. Mobile Arbeitsmaschine (1) nach Anspruch 4, wobei der Bereich zwischen den beiden parallel zueinander ausgerichteten Raupenträgern (5) vorzugsweise durch ein Rechteck begrenzt ist, bei dem zwei gegenüberliegende Rechteckseiten den Längsinnenseiten der beiden Raupenträger (5) entsprechen.

6. Mobile Arbeitsmaschine (1) nach einem der vorhergehenden Ansprüche, ferner umfassend einen Ballast (12), wobei der Ballast (12) auf der Abstützplatte (10), die mit dem Raupenkran (1) über die Abstützzylinder (8) verbunden ist, angeordnet ist und als Zentralballast am Unterwagen (2) dient, wobei vorzugsweise der Ballast (12) in eine an der Abstützplatte (10) befestigte Halterung (11) einfügbar ist.

7. Mobile Arbeitsmaschine (1) nach einem der vorhergehenden Ansprüche, wobei die beiden Raupenträger (5) mittig in ihrer Längsrichtung in einen ersten vorderen Abschnitt und einen zweiten hinteren Abschnitt unterteilbar sind, und die mindestens zwei an gegenüberliegenden Innenseiten angeordneten Kragarme (7) mit ihrem zugehörigen Abstützzylinder (8) sowohl in dem ersten vorderen Abschnitt als auch in dem zweiten hinteren Abschnitt vorhanden sind.

8. Mobile Arbeitsmaschine (1) nach Anspruch 7, wobei eine erste Abstützplatte (10) für die Kragarme (7) in dem ersten vorderen Abschnitt und eine zweite Abstützplatte (10) für die Kragarme (7) in dem zweiten hinteren Abschnitt vorgesehen sind, wobei vorzugsweise die erste und die zweite Abstützplatte (10) über die entsprechenden Abstützzylinder (8) mit den zugehörigen Kragarmen (7) verbunden sind.

## Claims

1. A mobile work machine (1), in particular a crawler crane, comprising:
an undercarriage (2) having a crawler travel gear (3); and
a superstructure (4) that is rotatably supported on the undercarriage (2),
wherein
the crawler travel gear (3) has two crawler carriers (5) that are aligned in parallel with one another and along whose longitudinal direction a respective crawler chain (6) is movably arranged; wherein
a respective cantilever arm (7) is provided at the mutually facing inner sides of the crawler carriers (5); and
a support cylinder (8) is arranged at the distal end of the respective cantilever arm (7),
**characterized by**
a support plate (10) that has connection means for a releasable connection to the support cylinders (8), with the support plate (10) preferably being correspondingly retractable and extendable by a travel of the support cylinders (8) in the connected state, with
the support plate (10) being configured to reduce the ground pressure in that it connects the one crawler carrier (5) to the other crawler carrier (5) via the support cylinders (8) and the support plate (10).

2. A mobile work machine (1) in accordance with claim 1, wherein the support cylinder (8) is retractable and extendable in a direction that is preferably orthogonal to a plane defined by the longitudinal directions of the two crawler carriers (5).

3. A mobile work machine (1) in accordance with one of the preceding claims, wherein the cantilever arm (7) is fastened to its associated crawler carrier (5) via a pivot joint (9) whose axis of rotation is preferably orthogonal to the plane defined by the longitudinal directions of the two crawler carriers (5).

4. A mobile work machine (1) in accordance with one of the preceding claims, wherein the support plate (10) is partly or completely arranged in a region between the two crawler carriers (5) aligned in parallel with one another in a state connected to the crawler crane (1).

5. A mobile work machine (1) in accordance with claim 4, wherein the region between the two crawler carriers (5) aligned in parallel with one another is preferably bounded by a rectangle in which two oppositely disposed rectangle sides correspond to the longitudinal inner sides of the two crawler carriers (5).

6. A mobile work machine (1) in accordance with one of the preceding claims, further comprising a ballast (12), wherein the ballast (12) is arranged on the support plate (10) that is connected to the crawler crane (1) via the support cylinders (8) and serves as a central ballast at the undercarriage (2), wherein the ballast (12) is preferably insertable into a holder (11) fastened to the support plate (10).

7. A mobile work machine (1) in accordance with one of the preceding claims, wherein the two crawler carriers (5) can be divided centrally in their longitudinal directions into a first front section and a second rear section and the associated support cylinders (8) of the at least two cantilever arms (7) are present both in the first front section and in the second rear section.

8. A mobile work machine (1) in accordance with claim 7, wherein a first support plate (10) for the cantilever arms (7) is provided in the first front section and a second support plate (10) for the cantilever arms (7) is provided in the second rear section, wherein the first and second support plates (10) being connected to the associated cantilever arms (7) via the corresponding support cylinders (8).

## Revendications

1. Machine de travail mobile (1), en particulier une grue sur chenilles, comprenant :
un châssis inférieur (2) pourvu d'un train de roulement à chenilles (3), et
un châssis supérieur (4), qui est monté rotatif par rapport au châssis inférieur (2), dans laquelle
le train de roulement à chenilles (3) comporte deux supports de chenille (5) orientés parallèlement l'un à l'autre, une chenille (6) étant respectivement disposée mobile le long de la direction longitudinale de ceux-ci, dans laquelle
un bras en porte-à-faux (7) est respectivement prévu sur les côtés intérieurs orientés l'un vers l'autre des supports de chenille (5), et
un vérin d'appui (8) est disposé sur l'extrémité distale du bras en porte-à-faux (7) respectif,
**caractérisée par**
une plaque d'appui (10), qui comporte des moyens de liaison pour la liaison libérable avec les vérins d'appui (8), la plaque d'appui (10) pouvant de préférence, dans l'état relié, être rentrée ou sortie en correspondance avec un déplacement des vérins d'appui (8), dans laquelle
la plaque d'appui (10) est conçue pour diminuer la pression au sol en reliant un support de chenille (5) à l'autre support de chenille (5) par le biais des vérins d'appui (8) et de la plaque d'appui (10).

2. Machine de travail mobile (1) selon la revendication 1, dans laquelle le vérin d'appui (8) peut être rentré ou sorti dans une direction qui est de préférence perpendiculaire à un plan défini par les directions longitudinales des deux supports de chenille (5).

3. Machine de travail mobile (1) selon l'une des revendications précédentes, dans laquelle le bras en porte-à-faux (7) est fixé à son support de chenille (5) associé par le biais d'une articulation tournante (9), dont l'axe de rotation est de préférence perpendiculaire au plan défini par les directions longitudinales des deux supports de chenille (5).

4. Machine de travail mobile (1) selon l'une des revendications précédentes, dans laquelle, dans un état relié à la grue à chenilles (1), la plaque d'appui (10) est disposée partiellement ou entièrement dans une zone entre les deux supports de chenille (5) orientés parallèlement l'un à l'autre.

5. Machine de travail mobile (1) selon la revendication 4, dans laquelle la zone entre les deux supports de chenille (5) orientés parallèlement l'un à l'autre est de préférence limitée par un rectangle, pour lequel deux côtés de rectangle opposés correspondent aux côtés intérieurs longitudinaux des deux supports de chenille (5).

6. Machine de travail mobile (1) selon l'une des revendications précédentes, comprenant en outre un lest (12), le lest (12) étant disposé sur la plaque d'appui (10), qui est reliée à la grue à chenilles (1) par le biais des vérins d'appui (8), et servant de lest central sur le châssis inférieur (2), le lest (12) pouvant de préférence être inséré dans un support (11) fixé sur la plaque d'appui (10).

7. Machine de travail mobile (1) selon l'une des revendications précédentes, dans laquelle les deux supports de chenille (5) peuvent être divisés au milieu dans leur direction longitudinale en une première partie avant et une seconde partie arrière, et les au moins deux bras en porte-à-faux (7) disposés sur des côtés intérieurs opposés avec leur vérin d'appui (8) associé étant présents aussi bien dans la première partie avant que dans la seconde partie arrière.

8. Machine de travail mobile (1) selon la revendication 7, dans laquelle une première plaque d'appui (10) pour les bras en porte-à faux (7) est prévue dans la première partie avant et une seconde plaque d'appui (10) pour les bras en porte-à faux (7) est prévue dans la seconde partie arrière, la première et la seconde plaque d'appui (10) étant de préférence reliées aux bras en porte-à-faux (7) associés par le biais des vérins d'appui (8) correspondants.
